# EUROPÄISCHE PATENTSCHRIFT

(11) **EP 0 670 970 B1**
(45) Veröffentlichungstag und Bekanntmachung des Hinweises auf die Patenterteilung: **24.04.1996**
(21) Anmeldenummer: 93924560.1
(22) Anmeldetag: 30.10.1993
(51) Int. Cl.: F16C 29/08, F16C 29/06, F16C 33/66, F16N 27/00

(54) **LINEARLAGERELEMENT**
LINEAR BEARING COMPONENT
ELEMENT DE ROULEMENT LINEAIRE

(30) Priorität: 19.11.1992 DE 4238910
(43) Veröffentlichungstag der Anmeldung: 13.09.1995
(73) Patentinhaber: INA Wälzlager Schaeffler KG, D-91072 Herzogenaurach (DE)
(72) Erfinder: WINKELMANN, Ludwig, D-91056 Erlangen (DE); KOSCHMIEDER, Hartmut, D-91056 Erlangen (DE)
(86) Internationale Anmeldenummer: EP9303037
(87) Internationale Veröffentlichungsnummer: WO9411644

(56) Entgegenhaltungen:
- EP-A- 0 491 988
- WO-A-93/12351
- CH-A- 360 552
- FR-A- 1 537 459
- FR-A- 2 142 463
- FR-A- 2 402 828
- US-A- 3 809 184
- US-A- 4 005 913
- US-A- 4 927 272
- US-A- 4 963 038
- US-A- 5 139 347
- US-A- 5 149 204

## Beschreibung

Die Erfindung betrifft ein Linearlagerelement, das an der Lauffläche einer Führungsschiene gelagert und an mindestens einer seiner beiden Stirnseiten mit einem Abstreifer versehen ist, welcher zum Zurückhalten von Schmierstoff in dem Lagerelement mit einem Endbereich auf der Lauffläche aufliegt, wobei an oder in dem Lagerelement wenigstens ein mit seiner Eintrittsseite an einer äußeren Zuführleitung angeschlossenes und an seiner Austrittsseite mit dem Lagerbereich verbundenes Zuführgerät für Schmierstoff angeordnet ist.

Aus dem Dokument DE-C-2 130 420 ist ein Lagerelement mit einer Abstreifereinheit bekannt, welches eine ständig dosierte Schmierung eines Wälzlagers mit einfachen und billigen Mitteln ermöglicht. Diese Vorrichtung enthält einen Abstreifer aus einem poylmeren Werkstoff mit einer Abstreifkante, die bei der hin- und hergehenden Bewegung eines als Rollenumlaufschuh ausgebildeten Lagerelements die Laufbahn reinigen soll, um Verunreinigungen von dem Wälzlager fernzuhalten und gleichzeitig den Austritt von Schmierstoff aus dem Lagerelement verhindert. Hier wird Schmierstoff von der Lageraußenseite über ein Element aus saugfähigem Material, das die auf der Lauffläche aufliegende Abstreifkante umgibt, in das Innere des Lagerelements gefördert. Dabei ist es möglich, daß mit dem Schmierstoff auch auf der Laufbahn aufliegende unerwünschte Emulsionen in das Lager transportiert werden.

Aus dem Dokument US-A-4 927 272 ist ein Linearlagerelement der eingangs genannten Art bekannt, dessen Zuführgerät als langgestreckte und kompliziert aufgebaute Schmierstoff-Einspritzeinheit mit einem Adaptergehäuse, einem Einspritzrohr, einem Schmierstoffbehälter, einem Meß- und Filterelement und Verteilerkanälen ausgebildet ist, die mit Zuführkanälen verbunden sind. Dabei sind die Zuführkanäle in dem Abstreifer angeordnet, der dadurch als Austauschteil eine aufwendige Konstruktion erhält. Somit muß beim Verschleiß der Abstreiferlippe ein relativ teueres Bauteil ausgetauscht werden. Das Zuführgerät des vorbekannten Linearlagerelements ist außerdem unmittelbar in eine Gewindebohrung des Lagerelements eingeschraubt und ragt aus diesem stirnseitig mit einem Teil seiner Länge heraus, so daß sich in Führungsschienenlängsrichtung große Lagerabmessungen ergeben.

Der Erfindung liegt die Aufgabe zugrunde, ein Linearlager mit einer kompakten Abstreifereinheit zu schaffen, die das Eindringen von Schmutz verhindert und es ermöglicht, definierte minimale Schmierstoffmengen ohne Leckverluste den Laufbahnen und Lagerbereichen in dem Lagerelement zuzuführen.

Mit einer solchen Abstreifereinheit ausgestattet soll der Schmierstoff bei der hin- und hergehenden Bewegung des Lagerelements möglichst vollständig in dem Lagerelement verbleiben, so daß sich die erforderlichen Schmierstoffmengen für die Nachschmierung drastisch verringern lassen. Auf diese Weise soll es den Betreibern von Anlagen mit Lagern mit Abstreifereinheiten ermöglicht werden, durch den Umweltschutz bedingte gesetzliche Auflagen besser zu erfüllen.

Diese Aufgabe wird erfindungsgemäß dadurch gelöst, daß das Zuführgerät als Zumeßventil ausgebildet und in einer Kammer eines Vorsatzkörpers angeordnet ist, der mit der äußeren Zuführleitung verbundene und in die Kammer einmündende Verteilerkanäle enthält und an einer Stirnseite des Lagerelements befestigt ist.

Zumeßventile sind handelsübliche Bauteile, die in Zentralschmieranlagen Verwendung finden. Sie öffnen bzw. schließen sich in Abhängigkeit von dem Druck des angelieferten Schmierstoffs.

Bei dem Lagerelement kann jeder Vorsatzkörper als die Führungsschiene umgebendes, im Querschnitt U-förmiges Bauteil ausgebildet sein, in welchem mehrere Kammern mit Zumeßventilen angeordnet sind.

Der Abstreifer kann als plattenförmiges Bauteil ausgebildet und zwischen dem Vorsatzkörper und dem Lagerelement angeordnet sein. In diesem Fall ist zweckmäßigerweise in dem Abstreifer eine Durchtrittsöffnung angeordnet, über welche das Zumeßventil an seiner Austrittsseite mit dem Lagerbereich verbunden ist. Es ist aber auch möglich, den Abstreifer an der von dem Lagerelement abgewandten Stirnseite des Vorsatzkörpers anzuordnen.

Eine einfache Herstellungsmöglichkeit ergibt sich, wenn in dem Vorsatzkörper jede Kammer für ein Zumeßventil als Sacklochbohrung ausgeführt ist.

Das Zumeßventil kann als hülsenförmiges Bauteil mit den in axialer Richtung hintereinander angeordneten Räumen Eintrittsöffnung, Dosierkammer, Abflußkammer und Austrittsöffnung ausgebildet sein. Es kann innerhalb der Kammer des Vorsatzkörpers von einem den Zuflußbereich der Kammer von dem Abflußbereich trennenden Dichtungsring umgeben sein. Eine Sicherung gegen axiales Verschieben des Zumeßventils erreicht man durch einen in eine Bohrung des Vorsatzkörpers eingepreßten und in eine Ringnut des Zumeßventils eingreifenden Zylinderstift. Zur axialen Befestigung kann das Zumeßventil auch in die Kammer eingeschraubt sein, die dann zumindest teilweise als Gewindebohrung ausgeführt ist.

Es ist auch möglich, das Zumeßventil aus zwei, beispielsweise mit parallelen Achsen nebeneinander angeordneten hülsenförmigen Bauteilen zu bilden, wobei hintereinander in dem einen Bauteil eine Eintrittsöffnung und eine Dosierkammer und in dem anderen Bauteil eine Abflußkammer und eine Austrittsöffnung angeordnet sind und die Bauteile eine stirnseitige Verbindung für die Dosierkammer und die Abflußkammer aufweisen. Die beiden Bauteile des Zumeßventils können auch auf den Vorsatzkörper und das Lagerelement aufgeteilt sein.

Ausführungsbeispiele der Erfindung sind in der Zeichnung dargestellt und werden im folgenden näher beschrieben. Es zeigen:
- Figur 1: ein Lagerelement mit einer Abstreifereinheit, welches an einer Führungsschiene angeordnet ist, teilweise in stirnseitiger Ansicht und teilweise im Querschnitt;
- Figur 2: das Lagerelement und die daran angebrachte Abstreifereinheit in einem Längsschnitt gemäß Linie II-II der Figur 1;
- Figur 3: das Lagerelement gemäß Figur 2 mit einer abgewandelten Abstreifereinheit;
- Figur 4: eine stirnseitige Ansicht der abgewandelten Abstreifereinheit;
- Figur 5: eine Draufsicht auf die Abstreifereinheit;
- Figur 6: die Abstreifereinheit in einem senkrechten Längsschnitt gemäß Linie VI-VI der Figur 4;
- Figur 7: ein Zumeßventil in einem Längsschnitt;
- Figur 8: einen Längsschnitt durch eine weitere Abstreifereinheit;
- Figur 9: einen Querschnitt durch die Abstreifereinheit gemäß Linie IX-IX der Figur 8;
- Figur 10: eine Draufsicht auf die Abstreifereinheit mit zwei Teilschnitten.

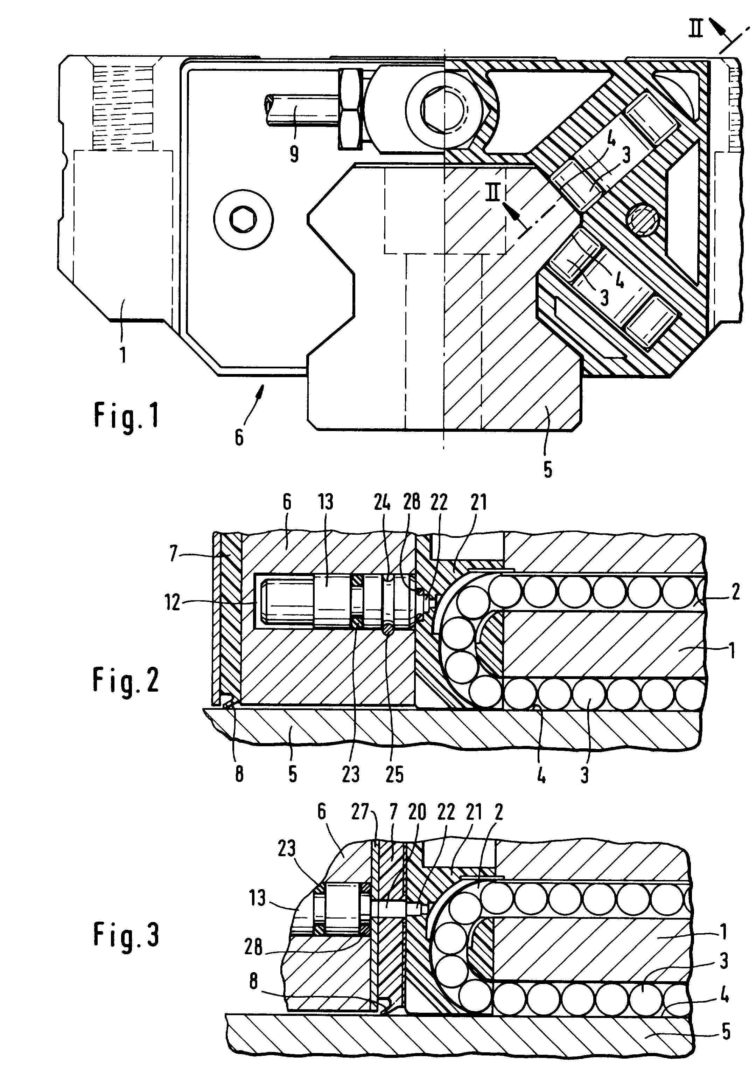

Entsprechend den Figuren 1 bis 7 ist an einem erfindungsgemäßen Lagerelement 1 eine Abstreifereinheit stirnseitig befestigt. Das Lagerelement 1 besteht aus einem Tragkörper und zwei an diesem stirnseitig angrenzenden Umlenkkörpern. Es weist Lagerbereiche 2 mit Wälzkörpern 3 auf, mit denen es sich an Laufflächen 4 einer Führungsschiene 5 abstützt. Die Abstreifereinheit besteht aus einem Vorsatzkörper 6, der als Trägerkörper für die Aufnahme von Zumeßventilen ausgebildet ist und an dem ein plattenförmiger Abstreifer 7 angeordnet ist. Bei der hin- und hergehenden Bewegung des Lagerelements 1 längs der Führungsschiene 5 gleitet eine Abstreiferlippe 8 mit ihrem Ende auf den Laufflächen 4 der Führungsschiene 5 entlang und verhindert den Austritt von Schmierstoff aus dem Wälzlagerbereich 2 und das Eindringen von Schmutz in das Lager.

Gemäß Figur 2 ist der Abstreifer 7 an der Stirnseite des Vorsatzkörpers 6 befestigt, die von dem Lagerelement 1 abgewandt ist. Die Abstreifereinheit gemäß Figur 3 weist dagegen einen Abstreifer 7 auf, der sich stirnseitig zwischen dem Vorsatzkörper 6 und dem Lagerelement 1 befindet.

Schmierstoff wird der Abstreifereinheit über eine Zuführleitung 9 von außen zugeführt. Zu diesem Zweck befinden sich in dem Vorsatzkörper 6 Verteilerkanäle 10, die als Bohrungen ausgeführt sind und mit Verschlußschrauben 11 nach außen verschlossen werden können. Die Verteilerkanäle 10 münden in als Sacklochbohrungen ausgeführte Kammern 12 ein, in welchen sich jeweils Zumeßventile 13 befinden.

Ein Zumeßventil 13 kann als hülsenförmiges Bauteil ausgebildet sein, welches axial hintereinander eine Eintrittsöffnung 14, eine Dosierkammer 15, eine Abflußkammer 16 und eine Austrittsöffnung 17 aufweist. Zwischen der Dosierkammer 15, in welcher sich ein federbeaufschlagter Kolben 18 befindet, und der Abflußkammer 16 ist ein Rückschlagventil mit einer federbeaufschlagten Kugel 19 als Verschlußorgan angeordnet.

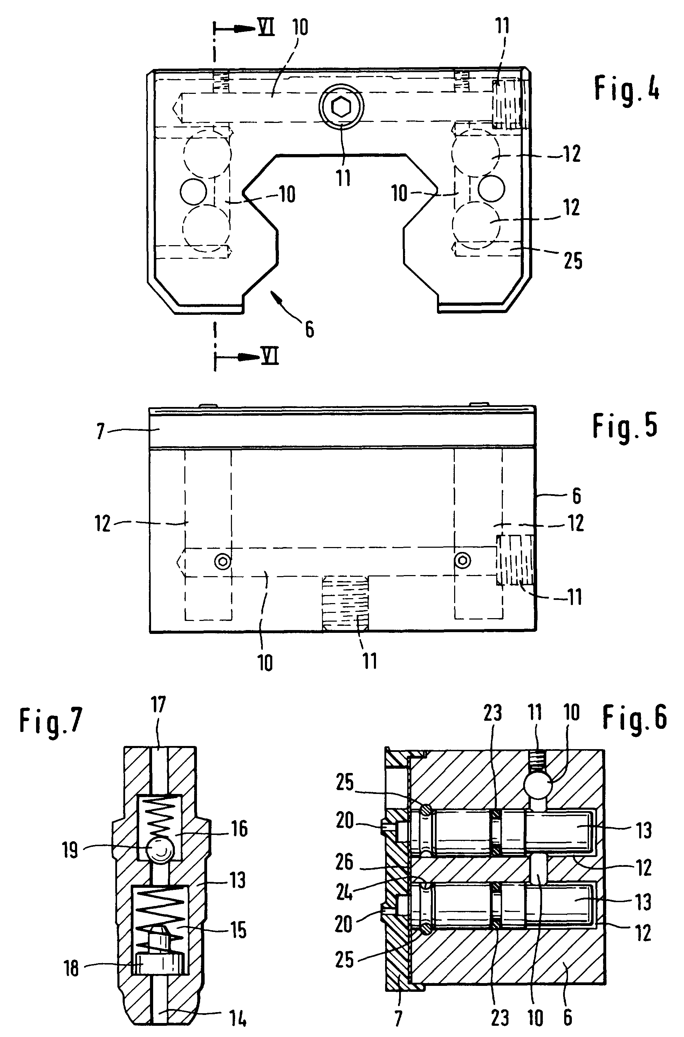

Jedes Zumeßventil 13 ist in einer Kammer 12 so angeordnet, daß seine Eintrittsöffnung 14 strömungsmäßig auf den benachbarten Verteilerkanal 10 folgt, während seine Austrittsöffnung 17 an dem Abstreifer 7 angrenzt, wo der Schmierstoff durch eine Durchtrittsöffnung 20 aus dem Vorsatzkörper 6 austreten und in das aus einem Tragkörper 29 und zwei Umlenkkörpern 21 bestehende Lagerelement 1 eintreten kann, bei einer Ausführung, wie sie in den Figuren 3 und 6 dargestellt ist. Die an den Tragkörpern 29 angrenzenden Umlenkkörper 21 für die Wälzkörper 3 des Lagerelements 1 weisen ebenfalls Durchtrittsöffnungen 22 auf, die mit den Durchtrittsöffnungen 20 des Abstreifers 7 in Verbindung stehen. Bei der Ausführung gemäß Figur 2 sind die Durchtrittsöffnungen 22 der Umlenkkörper 21 unmittelbar mit den Austrittsöffnungen 17 der Zumeßventile 13 verbunden.

Jedes Zumeßventil 13 ist innerhalb der Kammer 12 mit einem Dichtungsring 23 abgedichtet angeordnet. Der Dichtungsring 23 dichtet die Seite der Eintrittsöffnung 14 der Kammer 12 gegenüber deren Seite der Austrittsöffnung 17 ab. Sie ist als Ringdichtung ausgeführt, die in eine Umfangsnut des Zumeßventils 13 eingesetzt ist.

Das Zumeßventil 13 weist außerdem eine zweite Ringnut 24 an der äußeren Oberfläche auf, wobei an einer Umfangsstelle ein Zylinderstift 25, der sich in einer Bohrung des Vorsatzkörpers 6 befindet, in die Ringnut 24 eingreift, um das Zumeßventil 13 gegen axiale Verschiebung zu sichern.

Die Versorgung der Lagerbereiche 2 mit Schmierstoff erfolgt dadurch, daß über die Zuführleitung 9 und die Verteilerkanäle 10 der Schmierstoff mit Druckimpulsen in die Kammern 12 und in die Eintrittsöffnungen 14 der Zumeßventile 13 eingefördert wird. Dabei verschiebt sich der Kolben 18 in der Dosierkammer 15 gegen die Wirkung seiner Druckfeder und bewirkt einen Transport des in der Dosierkammer 15 befindlichen Schmierstoffs zum Rückschlagventil hin, so daß die Kugel 19 von ihrem Sitz gegen die Wirkung ihrer Druckfeder abhebt und Schmierstoff in die Abflußkammer 16 gelangt. Bei einem solchen Druckimpuls versetzt also der mit Spiel in der Gehäusebohrung des Zumeßventils geführte Kolben seine Ruhelage und verdrängt den vor dem Kolben befindlichen Schmierstoff über das Rückschlagventil in die Abflußkammer 16 und von dort über die Austrittsöffnung 17 in den Lagerbereich. Die Kolbenspitze dichtet beim Erreichen der Endlage die Dosierkammer 15 in Richtung Rückschlagventil ab. Nach der Druckentlastung schiebt die Kolbenfeder den Kolben 18 in seine Ruhelage zurück, wobei die Dosierkammer 15 über den Ringspalt zwischen dem Kolben 18 und der Gehäusebohrung des Zumeßventils 13 wieder mit Schmierstoff gefüllt wird. Das Rückschlagventil verhindert das Rückströmen des Schmierstoffs.

Die der Führungsschiene 5 zugewandte Innenkontur des Vorsatzkörpers 6 kann so gestaltet sein, daß sie zur Führungsschiene 5 einen kleinen Spalt aufweist und somit als Vorabscheider für Späne und andere größere Verunreinigungen dient. Die Abdichtung der Durchtrittsöffnungen 20 gemäß Figur 6 und der Fuge zwischen dem Vorsatzkörper 6 und dem Abstreifer 7 kann mit Hilfe einer Dichtungsplatte 26 erfolgen, die zwischen dem Vorsatzkörper 6 und dem Abstreifer 7 angeordnet ist.

Es ist auch möglich, die Zumeßventile 13 an der Seite ihrer Austrittsöffnungen 17 über eine zusätzliche Platte 27 abzustützen, die an dem Vorsatzkörper 6 stirnseitig befestigt wird. Um die axialen Druckkräfte der Zumeßventile 13 aufzunehmen, kann die Platte 27 mit dem Vorsatzkörper 6 verschraubt sein. Eine solche Ausführung ist in Figur 3 dargestellt. Zwischen der Platte 27 und dem Zumeßventil 13 wird dann zweckmäßigerweise ein Dichtungsring 28 angeordnet. Auch die Ausführung nach Figur 2 zeigt einen Dichtungsring 28 für das Zumeßventil 13.

Um die axiale Baulänge des Vorsatzkörpers 6 zu verringern, kann das Zumeßventil auch aus zwei achsparallel nebeneinander angeordneten Hülsen bestehen, wobei in der einen Hülse die Dosierkammer 15 und in der anderen Hülse die Abflußkammer 16 angeordnet ist. Beide Kammern benötigen dann einen Überströmkanal, durch den sie miteinander verbunden sind. Die Hülse mit der Dosierkammer 15 und die Hülse mit der Abflußkammer 16 können in ihre Aufnahmebohrungen eingepreßt sein.

Der Vorsatzkörper 6 und der Abstreifer 7 können zu einer unverlierbaren Einheit miteinander verbunden und aus einem hochfesten Kunststoff, beispielsweise glasfaserverstärktem Polyamid, hergestellt sein. Diese beiden Teile können durch Ultraschallschweißen miteinander verbunden werden. In diesem Fall kann eine Abdichtung zwischen den beiden Teilen entfallen. Die Abstreiferlippe 8 kann dann an dem Abstreifer 7 angespritzt sein. Es ist aber auch möglich, sie in einer Aufnahmenut anzuordnen und zwischen zwei Teilen einzuklemmen oder dort auf andere Weise formschlüssig zu fixieren.

Die Dosierkammer und die Abflußkammer lassen sich sowohl in Reihe, als auch parallel schalten, wobei das Rückschlagventil von einer Kugel mit einer platzsparenden Plattenfeder gebildet sein kann. Eine besonders kostengünstige Baueinheit ergibt sich, wenn für das Zumeßventil 13 nicht besondere Hülsen verwandt werden, sondern wenn die Dosierkammer und die Abflußkammer in den Werkstoff des Vorsatzkörpers eingeformt werden. Statt der bekannten Form des handelsüblichen Zumeßventils können Zumeßventile auch in anderen bekannten Bauformen, beispielsweise als Plattenventile oder Magnetventile, verwendet werden. Der Vorsatzkörper 6, der Abstreifer 7 mit der Abstreiferlippe 8 und der Umlenkkörper 21 können auch als einstückiges Bauteil ausgeführt sein.

In dem Zumeßventil 13 können in der Dosierkammer 15, in der Abflußkammer 16, in dem diese Kammern miteinander verbindenden Kanal, oder in dem zu der Austrittsöffnung 17 führenden Kanal Überwachungskomponenten in Form von Drucksensoren, Mikroschaltern oder Annäherungsschaltern integriert sein.

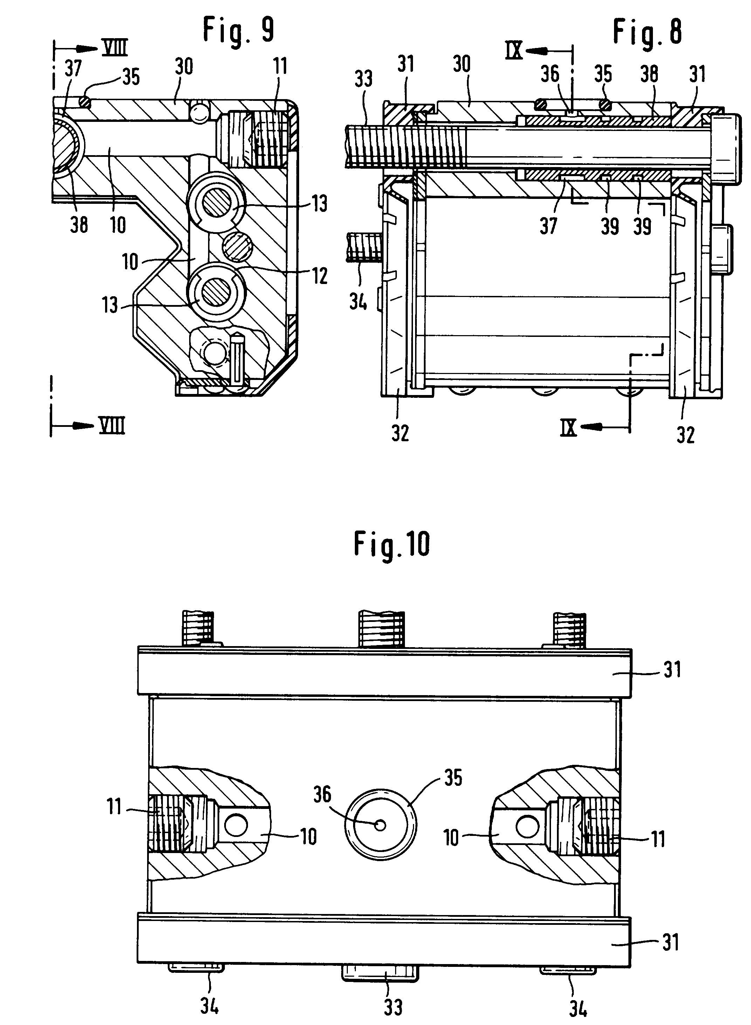

Die abgewandelte Abstreifereinheit nach den Figuren 8 bis 10 besteht aus dem Vorsatzkörper 30 und zwei an diesem stirnseitig angrenzenden Abstreifern 31 mit Abstreiferlippen 32. Sie sind gemeinsam mit dem Vorsatzkörper 30 mittels einer zentralen Schraube 33 und weiterer Schrauben 34 an dem Lagerelement 1 befestigt. Die innerhalb des Vorsatzkörpers 30 verlaufenden Verteilerkanäle 10 für den Schmierstoff können über mehrere nach außen führende Bohrungen wahlweise mit der Zuführleitung 9 verbunden werden. Im Ausführungsbeispiel sind davon zwei waagerechte Bohrungen mit Verschlußschrauben 11 verschlossen, während eine von einem Dichtungsring 35 umgebene senkrechte Bohrung 36 über eine große Ringnut 37 einer Wechselhülse 38 mit einem zu den Zumeßventilen 13 führenden waagerechten Verteilerkanal 10 verbunden ist.

Die Wechselhülse 38 ist in eine Bohrung des Vorsatzkörpers 30 passend eingesetzt und umgibt die zentrale Schraube 33. Außer der großen Ringnut 37 sind an der Wechselhülse 38 zwei weitere, von deren äußerer Oberfläche ausgehende kleine Ringnuten 39 in Abständen axial hintereinander so angeordnet, daß nach dem Herausnehmen der Wechselhülse 38 aus dem Vorsatzkörper 30, dem Wenden der Wechselhülse 38 um 180° um eine zur Hülsenachse rechtwinkelige Achse und dem Wiedereinsetzen der Wechselhülse 38 in dieser neuen Stellung in den Vorsatzkörper 30 sich unter der Bohrung 36 keine Ringnut befindet. Die Verbindung zwischen der nach außen führenden Bohrung 36 und den Verteilerkanälen 10 ist damit unterbrochen.

Diese Anordnung kann vorgesehen werden, wenn der Schmierstoff nach dem Herausschrauben einer Verschlußschraube 11 über die so geschaffene Öffnung des entsprechenden Verteilerkanals 10 in den Vorsatzkörper 30 eingefördert werden soll. In dieser neuen Stellung der Wechselhülse 38 ist über die beiden kleinen Ringnuten 39, die jeweils neben der Bohrung 36 angeordnet, aber nicht mit dieser verbunden sind, eine Verbindung der beiden Verteilerkanäle 10 hergestellt, die sich zu beiden Seiten der zentralen Schraube 33 erstrecken. An einer Stelle des Vorsatzkörpers 30 von der Zuführleitung 9 einströmender Schmierstoff kann daher zu allen in dem Vorsatzkörper 30 angeordneten Zumeßventilen 13 gelangen.

Die erfindungsgemäßen Ausführungen sind nicht auf wälzgelagerte Linearelemente beschränkt, sondern können auch ebensogut an Lagerelementen mit Gleitlagern Verwendung finden.

### Bezugszeichen

1 Lagerelement
2 Lagerbereich
3 Wälzkörper
4 Lauffläche
5 Führungsschiene
6 Vorsatzkörper
7 Abstreifer
8 Abstreiferlippe
9 Zuführleitung
10 Verteilerkanäle
11 Verschlußschraube
12 Kammer
13 Zumeßventil
14 Eintrittsöffnung
15 Dosierkammer
16 Abflußkammer
17 Austrittsöffnung
18 Kolben
19 Kugel
20 Durchtrittsöffnung
21 Umlenkkörper
22 Durchtrittsöffnung
23 Dichtungsring
24 Ringnut
25 Zylinderstift
26 Dichtungsplatte
27 Platte
28 Dichtungsring
29 Tragkörper
30 Vorsatzkörper
31 Abstreifer
32 Abstreiferlippe
33 zentrale Schraube
34 Schraube
35 Dichtungsring
36 Bohrung
37 große Ringnut
38 Wechselhülse
39 kleine Ringnut

## Patentansprüche

1. Linearlagerelement (1), das an der Lauffläche (4) einer Führungsschiene (5) gelagert und an mindestens einer seiner beiden Stirnseiten mit einem Abstreifer (7, 31) versehen ist, welcher zum Zurückhalten von Schmierstoff in dem Lagerelement (1) mit einem Endbereich auf der Lauffläche (4) aufliegt, wobei an oder in dem Lagerelement (1) wenigstens ein mit seiner Eintrittsseite an einer äußeren Zuführleitung (9) angeschlossenes und an seiner Austrittsseite mit dem Lagerbereich (2) verbundenes Zuführgerät für Schmierstoff angeordnet ist, **dadurch gekennzeichnet**, daß das Zuführgerät als Zumeßventil (13) ausgebildet und in einer Kammer (12) eines Vorsatzkörpers (6, 30) angeordnet ist, der mit der äußeren Zuführleitung (9) verbundene und in die Kammer (12) einmündende Verteilerkanäle (10) enthält und an einer Stirnseite des Lagerelements (1) befestigt ist.

2. Lagerelement nach Anspruch 1, **dadurch gekennzeichnet**, daß in dem Vorsatzkörper (6, 30) die Kammer (12) für das Zumeßventil (13) als Sacklochbohrung ausgeführt ist.

3. Lagerelement nach Anspruch 1, **dadurch gekennzeichnet**, daß der mit dem Zumeßventil (13) verbundene Lagerbereich (2) als Wälzkörperumlauf ausgebildet ist, der sich innerhalb eines Tragkörpers (29) und zweier Umlenkkörper (21) des Lagerelements (1) befindet.

4. Lagerelement nach Anspruch 1, **dadurch gekennzeichnet**, daß der Vorsatzkörper (6, 30) als die Führungsschiene (5) umgebendes, im Querschnitt im wesentlichen U-förmiges Bauteil ausgebildet ist, in welchem mehrere Kammern (12) mit Zumeßventilen (13) angeordnet sind.

5. Lagerelement nach Anspruch 1, **dadurch gekennzeichnet**, daß der Abstreifer (7, 31) als plattenförmiges Bauteil ausgebildet und zwischen dem Vorsatzkörper (6, 30) und dem Lagerelement (1) angeordnet ist.

6. Lagerelement nach Anspruch 1, **dadurch gekennzeichnet**, daß der Abstreifer (7, 31) an der von dem Lagerelement (1) abgewandten Stirnseite des Vorsatzkörpers (6, 30) angeordnet ist.

7. Lagerelement nach Anspruch 1, **dadurch gekennzeichnet**, daß in dem Abstreifer (7) eine Durchtrittsöffnung (20) angeordnet ist, über welche das Zumeßventil (13) an seiner Austrittsseite mit dem von dem Lagerelement (1) und der Führungsschiene (5) gebildeten Lagerbereich (2) verbunden ist.

8. Lagerelement nach Anspruch 1, **dadurch gekennzeichnet**, daß das Zumeßventil (13) als hülsenförmiges Bauteil mit den in axialer Richtung hintereinander angeordneten Räumen Eintrittsöffnung (14), Dosierkammer (15), Abflußkammer (16) und Austrittsöffnung (17) ausgebildet ist.

9. Lagerelement nach Anspruch 1, dadurch gekennzeichnet, daß das Zumeßventil (13) innerhalb der Kammer (12) des Vorsatzkörpers (6) von einem den Zuflußbereich der Kammer (12) von deren Abflußbereich trennenden Dichtungsring (23) umgeben ist.

10. Lagerelement nach Anspruch 1, **dadurch gekennzeichnet**, daß das Zumeßventil von zwei mit parallelen Achsen nebeneinander angeordneten hülsenförmigen Bauteilen gebildet ist, wobei hintereinander in dem einen Bauteil eine Eintrittsöffnung und eine Dosierkammer und in dem anderen Bauteil eine Abflußkammer und eine Austrittsöffnung angeordnet sind und die Bauteile eine stirnseite Verbindung für die Dosierkammer und die Abflußkammer aufweisen.

11. Lagerelement nach Anspruch 1, **dadurch gekennzeichnet**, daß die Verteilerkanäle (10) in dem Vorsatzkörper (30) zwischen der Kammer (12) für das Zumeßventil (13) und der Zuführleitung (9) über Ringnuten (37, 39) einer in eine Aufnahmebohrung des Vorsatzkörpers (30) passend eingesetzten Wechselhülse (38) miteinander verbunden sind.

12. Lagerelement nach Anspruch 11, **dadurch gekennzeichnet**, daß die Wechselhülse (38) mehrere von ihrer äußeren Oberfläche ausgehende Ringnuten, eine große Ringnut (37) und zwei kleine Ringnuten (39) aufweist, die in Abständen axial hintereinander angeordnet sind.

13. Lagerelement nach Anspruch 12, **dadurch gekennzeichnet**, daß in einer Stellung der in den Vorsatzkörper (30) eingesetzten Wechselhülse (38) die große Ringnut (37) über eine Bohrung (36) des Vorsatzkörpers (30) nach außen geöffnet ist.

## Claims

1. Linear bearing element (1) mounted on the running face (4) of a guide rail (5) and comprising, on at least one of its two front ends, a wiper (7, 31) which bears by an end region against the running face (4) to retain lubricant in the bearing element (1), at least one lubricant supply device, with its inlet end connected to an outer supply duct (9) and its outlet end connected to the bearing region (2), being arranged on or in the bearing element (1), **characterized in that** the supply device is configured as a dosing valve (13) and arranged in a chamber (12) of an attachment body (6, 30) comprising distributing channels (10) which are connected to the outer supply duct (9) and open into the chamber (12), the attachment body (6, 30) being fixed on an end face of the bearing element (1).

2. Bearing element according to claim 1, **characterized in that** the chamber (12) for the dosing valve (13) in the attachment body (6, 30) is made in the form of a pocket bore.

3. Bearing element according to claim 1, **characterized in that** the bearing region (2) connected to the dosing valve (13) is configured as a rolling element circuit within a carrier body (29) and two deflector bodies (21) of the bearing element (1).

4. Bearing element according to claim 1, **characterized in that** the attachment body (6, 30) is made as a component with an essentially U-shaped cross-section which surrounds the guide rail (5) and comprises a plurality of chambers (12) in which dosing valves (13) are arranged.

5. Bearing element according to claim 1, **characterized in that** the wiper (7, 31) is made as a plate-shaped component and is arranged between the attachment body (6, 30) and the bearing element (1).

6. Bearing element according to claim 1, **characterized in that** the wiper (7, 31) is arranged on the end face of the attachment bdy (6, 30) facing away from the bearing element (1).

7. Bearing element according to claim 1, **characterized in that** the wiper (7) comprises a transfer opening (20) by which the dosing valve (13) is connected at its outlet end with the bearing region (2) formed by the bearing element (1) and the guide rail (5).

8. Bearing element according to claim 1, **characterized in that** the dosing valve (13) is configured as a bush-type component comprising spaces arranged axially behind one another to form an inlet opening (14), a dosing chamber (15), a discharge chamber (16) and an outlet opening (17).

9. Bearing element according to claim 1, **characterized in that**, within the chamber (12) of the attachment body (6), the dosing valve (13) is surrounded by a sealing ring (23) which separates the inflow region of the chamber (12) from the discharge region thereof.

10. Bearing element according to claim 1, **characterized in that** the dosing valve is formed by two bush-type components arranged next to each other with parallel axes, and an inlet opening and a dosing chamber are arranged behind one another in one of the said two components, and a discharge chamber and an outlet opening are arranged behind one another in the other of the said two components which are provided on their front ends with a connection connecting the dosing chamber and the discharge chamber to each other.

11. Bearing element according to claim 1, **characterized in that** the distributing channels (10) in the attachment body (30) which are situated between the chamber (12) for the dosing valve (13) and the supply duct (9) are connected to one another by annular grooves (37, 39) of a reversible bush (38) which is fitted into a receiving bore of the attachment body (30).

12. Bearing element according to claim 11, **characterized in that** the reversible bush (38) comprises a plurality of annular grooves, one large annular groove (37) and two small annular grooves (39), which start from an outer surface of the reversible bush (38) and are arranged axially spaced behind one another.

13. Bearing element according to claim 12, **characterized in that**, in one position of the reversible bush (38) inserted into the attachment body (30), the large annular groove (37) communicates with the outside via a bore (36) of the attachment body (30).

## Revendications

1. Elément de palier linéaire (1) monté sur la face de glissement (4) d'un rail de guidage (5) et muni, sur au moins l'une de ses faces frontales, d'un racleur (7, 31) qui, afin de retenir du lubrifiant dans l'élément de palier (1), s'appuie par une région d'extrémité contre la face de glissement (4), au moins un appareil d'alimentation en lubrifiant étant agencé sur, ou dans l'élément de palier (1) en ayant son côté entrée raccordée à un conduit externe d'alimentation (9) et son côté sortie relié à la région du palier (2), **caractérisé en ce que** l'appareil d'alimentation est configuré sous la forme d'une soupape de dosage (13) en étant agencé dans une chambre (12) d'un corps d'attachement (6, 30) qui est fixé sur l'une des faces frontales de l'élément de palier (1) et comprend des canaux de distribution (10) qui sont reliés au conduit externe d'alimentation (9) et débouchent dans ladite chambre (12).

2. Elément de palier selon la revendication 1, **caractérisé en ce que** la chambre (12) prévue dans le corps d'attachement (6, 30) pour loger la soupape de dosage (13) est configurée sous la forme d'un alésage borgne.

3. Elément de palier selon la revendication 1, **caractérisé en ce que** la région de palier (2) reliée à la soupape de dosage (13) est configurée sous la forme d'un circuit de corps roulants qui se trouve à l'intérieur d'un corps de support (29) et de deux corps de renvoi (21) de l'élément de palier (1).

4. Elément de palier selon la revendication 1, **caractérisé en ce que** le corps d'attachement (6, 30) est configuré sous la forme d'un composant à section droite globalement en forme d'U et comprend plusieurs chambres (12) munies de soupapes de dosage (13).

5. Elément de palier selon la revendication 1, **caractérisé en ce que** le racleur (7, 31) est configuré sous la forme d'un composant en forme de plaque et est agencé entre le corps d'attachement (6, 30) et l'élément de palier (1).

6. Elément de palier selon la revendication 1, **caractérisé en ce que** le racleur (7, 31) est agencé sur la face frontale du corps d'attachement (6, 30) qui est opposée à l'élément de palier (1).

7. Elément de palier selon la revendication 1, **caractérisé en ce que**, le racleur (7) comprend une ouverture de transfert (20) qui établit une liaison entre le côté sortie de la soupape de dosage (13) et la région de palier (2) formée par l'élément de palier (1) et le rail de guidage (5).

8. L'élément de palier selon la revendication 1, **caractérisé en ce que** la soupape de dosage (13) est configurée sous la forme d'une douille comprenant, agencés l'un derrière l'autre en direction axiale, des espaces qui forment une ouverture d'entrée (14), une chambre de dosage (15), une chambre de décharge (16) et une ouverture de sortie (17).

9. L'élément de palier selon la revendication 1, **caractérisé en ce qu'**à l'intérieur de la chambre (12) du corps d'attachement (6), la soupape de dosage (13) est entourée par une bague d'étanchéité (23) qui sépare la région d'admission de cette chambre (12) de sa région de décharge.

10. L'élément de palier selon la revendication 1, **caractérisé en ce que** la soupape de dosage est formée à partir de deux composants en forme de douille agencés à axes parallèles, l'un à côté de l'autre, et en ce qu'il est agencé, l'une derrière l'autre, dans l'un de ces composants, une ouverture d'entrée et une chambre de dosage, et dans l'autre composant, une chambre de décharge et une ouverture de sortie, les deux composants étant munis sur leurs faces frontales d'une liaison entre la chambre de dosage et la chambre de décharge.

11. L'élément de palier selon la revendication 1, **caractérisé en ce que** les canaux de distribution (10) prévus dans le corps d'attachement (30) et situés entre la chambre (12) de la soupape de dosage (13) et le conduit d'alimentation (9) sont reliés, l'un à l'autre, par des rainures annulaires (37, 39) d'une douille inversible (38) qui est insérée de manière ajustée dans un alésage de réception du corps d'attachement (30).

12. L'élément de palier selon la revendication 11, **caractérisé en ce que** la douille inversible (38) comprend plusieurs rainures annulaires, à savoir, une rainure annulaire grande (37) et deux rainures annulaires petites (39), qui s'étendent à partir de la surface externe de la douille inversible (38) en étant agencées axialement à distance, l'une derrière l'autre.

13. L'élément de palier selon la revendication 12, **caractérisé en ce que**, dans une position de la douille inversible (38) insérée dans le corps d'attachement (30), la rainure annulaire grande (37) communique avec l'extérieur par un alésage (36) du corps d'attachement (30).
